# EUROPEAN PATENT SPECIFICATION

(11) **EP 3 898 855 B1**
(45) Date of publication and mention of the grant of the patent: **26.10.2022**
(21) Application number: 19828732.8
(22) Date of filing: 19.12.2019
(51) Int. Cl.: C09D 11/36, C09D 11/52, H01B 1/22

(54) **CONDUCTIVE INK JET PRINTING INK COMPOSITION**
LEITFÄHIGE TINTENSTRAHLDRUCKFARBENZUSAMMENSETZUNG
COMPOSITION D'ENCRE POUR IMPRESSION À JET D'ENCRE CONDUCTRICE

(30) Priority: 20.12.2018 EP 18214389
(43) Date of publication of application: 27.10.2021
(73) Proprietor: ECKART GmbH, 91235 Hartenstein (DE)
(72) Inventor: JORDAN, Volker, 91235 Hartenstein (DE); ENGEL, Stefan, 90607 Rückersdorf (DE); HERZING, Wolfgang, 91235 Hartenstein (DE)
(74) Representative: Altana IP Department
(86) International application number: PCT/EP2019/086225
(87) International publication number: WO 2020/127676

(56) References cited:
- EP-A1- 1 571 186
- US-A1- 2015 070 818

## Description

The present invention relates to conductive ink compositions, the manufacture of such compositions, and the use of these compositions in an ink jet printing process.

In an ink jet printing process, tiny drops of ink jet printing ink are projected directly on the surface of a substrate for printing, without physical contact between the printing device and the substrate surface. The placement of each drop on the printing surface is controlled electronically. The ink jet printing technology has become an important technology for printing variable data and images on various substrates, such as paper, cardboard, cans, bottles, foils, etc. Ink jet technology allows to print data and images at high speed and is capable of providing high definition prints.

Various droplet formation processes have been developed in the past. Droplet formation can be effected for example electrostatically, magnetically, piezo electrically, electro thermally, via mechanical micro valves or by spark discharge. Irrespective of the manner of droplet formation, ink jet technology divides in principle into two categories, viz. continuous ink jet (CIJ) and impulse or drop-on-demand (DOD) technology.

In continuous ink jet technology, ink flows under pressure through a nozzle to form droplets that are applied to a substrate in a continuous jet. In the impulse technology the ink reservoir is kept at or below atmospheric pressure. A droplet of ink is only released from the printing nozzle in response to the droplet-forming unit being subjected to a controlled stimulating impulse. This technology is currently not only used in ink jet printers for professional and private use, but also in 3D printing technology.

Metal particles such as silver nanoparticles have been used to obtain reflective surfaces with metallic glint. For example, in WO 2008/024542 an ink for use in an ink jet printing process for obtaining reflective surfaces is disclosed comprising water as a solvent and 2 - 40 wt.-% of metal particles (silver, gold, zinc, tin, copper, nickel, cobalt, rhodium, palladium, or platinum) with an average particles size of less than 5 µm.

It has been recognized that when a conductive ink is used in an ink jet printing process, this technology can be used to provide conductive networks in a fast, reliable, and flexible way, without the need to use any photographic masks. This technology is in principle also suited to provide a conductive pattern on a variety of substrates, including flexible substrates, provided the conductive composition
- can be cured, dried or sintered at relatively low temperature,
- shows a good adhesion to the substrate, and
- shows a good electrical conductivity.

In general, a conductive ink composition comprises
- a solvent or a mixture of solvents,
- a binder or a mixture of binders, and
- a conductive pigment.

Such compositions are known in the art, for example from WO 2015/023370. In the composition submicron silver particles are used in combination with a thermoplastic resin and optionally an organic diluent or solvent.

In US 6,979,416 B2 an ink jet printing ink is disclosed which comprises metal powders in a wide range of particle sizes, binders such as cellulose resin, vinyl resin or petroleum resin and solvents.

In EP 1571186 a ink composition for use in an ink jet printing process is disclosed that comprises colloidal metal particles (nickel, copper, gold, platinum, palladium or amalgamates thereof, a dispersing agent with a molecular weight in the range from 200 to 30,000 g/mol, and a solvent mixture with water or an organic solvent that is miscible with water. The metal particles have a diameter of at most 200 nm.

In CN 103146260 a conductive ink composition is disclosed that can be used in an ink jet printing process. The binder is based on acrylates.

In CN 203967239 U a paper coated by an ink jet printing ink forming an ultrahigh frequency RFID antenna is described. The ink jet printing ink comprises nano silver particles and has many different components.

WO 2017121982 A1 discloses a process for applying a conductive paste to a glass substrate. The conductive paste contains conductive particles such as Ag particles and glass frit particles to make this ink compatible to the glass substrate.

It was found that the conductive ink compositions from the state-of-the art show a tendency to segregate after some time, so they need to be re-dispersed prior to use or suitable dispersant needs to be added to these compositions. Such dispersants can reduce the conductivity of the ink after application and drying on the substrate.

Nanoparticles were used in the past for improving the stability of the solution. However, they are suspected to present environmental disadvantages and healthy problems. Also they may be sensitive towards oxidation which strongly diminishes the conductivity in cured films. Therefore, it would be desirable to have a stable solution using bigger metal particles.

On the other hand many ink formulations using lager silver particles are prone to nozzle clogging when used with ink jet technology.

Many ink jet formulations in the art have many different components, which decreases the versatility of their use. For example, such inks comprise glass particles or additional conductive particles like graphite, graphene or nanotubes.

The problem of the present invention is to find a conductive ink jet printing ink that is highly capable of being used in state-of-the-art ink jet printing apparatus for printing a variety of conductive patterns on a variety of substrates without the disadvantages of the prior art conductive ink compositions.

A further problem is to provide a method of making such an ink jet printing ink.

The problems were solved by providing an ink jet printing ink composition comprising the following components:
(a) 60 - 84.5 wt.-% of an organic solvent or a mixture of organic solvents,
(b) 0.5 - 5 wt.-% of a binder, wherein the binder comprises ethyl cellulose in an amount of a range of 85 to 100 wt.-%, based on the total amount of the binder,
(c) 15 - 25 wt.-% of silver particles having a d₅₀-value in a range of 130 nm and 800 nm,
(d) optionally antioxidizing agents,
(e) optionally a dispersing agent for the silver particles different from binder (b),
wherein all amounts are referred to the total amount of the ink jet printing ink composition, if not defined otherwise.

In a preferred embodiment, the ink jet printing ink composition comprises the components (a), (b), (c) and (e) in an amount of a range of 95 to 100 wt.-%, based on the total composition.

Further preferred embodiments are depicted in claims 3 to 11.

The problem was further solved by providing a method of producing an ink jet printing ink composition, characterized that it comprises the following steps:
(i) Providing a silver particle dispersion having a d₅₀-value in a range of 130 nm and 800 nm and optionally coating the silver particles with a dispersing agent (e)
(ii) Optionally drying the silver pigment dispersion of step (i),
(iii) preparing a first dispersion by dissolving the binder (b) in the organic solvent or a mixture of organic solvents (a),
(iv) adding the silver pigment dispersion of step (i) or the silver pigment powder of step
(ii) to the dispersion of step (iii) under stirring and/or impact of ultrasound.

In a further embodiment the present invention relates to the use of the Ink jet printing ink composition in a drop-on-demand ink jet printing process on a substrate to form a conductive layer.

In a further embodiment the present invention relates to a process to apply a conductive line or a pattern to a substrate, characterized in that,
(i) an ink jet printing ink is printed by a drop-on-demand ink jet process or a continuous ink jet process on a substrate,
(ii) optionally the printed ink is dried at temperatures of 35 °C to 80 °C and
(iii) the printed ink is sintered at temperatures of 400 to 600 °C.

### Detailed description:

### Solvents (a):

In the ink jet composition according to the present invention an organic solvent or a mixture of organic solvents is used. As used in the meaning of this invention the words "solvent" and "organic solvent" are equivalent.

In a further preferred embodiment, the ink jet printing ink has a flash point of at least 61 °C, preferably at least 62 °C. The "flash point" of a volatile material is the lowest temperature at which vapours of the ink composition will ignite, given an ignition source. In this invention the flash point is determined according to the method of Abel-Pensky.

The flash point of the ink jet printing ink is mainly determined by the solvents used therein.

The organic solvent is preferably a polar organic solvent, and examples include alcohols (such as methyl alcohol, ethyl alcohol, propyl alcohol, butyl alcohol or isopropyl alcohol, ketones (such as acetone, methyl ethyl ketone, and cyclohexanone and the like), carboxylate esters (such as methyl acetate, ethyl acetate, propyl acetate, butyl acetate, methyl propionate, and ethyl propionate and the like), and ethers (such as diethyl ether, dipropyl ether, tetrahydrofuran and dioxane, and the like).

In particular, the organic solvent preferably contains one or more types of an alkylene glycol ether that is a liquid at ambient temperature and pressure.

The alkylene glycol ether can be an ethylene glycol based ether or propylene glycol based ether which contains any of a methyl, n-propyl, i-propyl, n-butyl, i-butyl, hexyl, or 2-ethyl hexyl resin group and/or an allyl or phenyl group having a double bond as a base. These alkylene glycol ethers are colorless with little odor, and have an ether group and a hydroxyl group in the molecule, and therefore demonstrate the properties of both alcohols and ethers, and are liquid at room temperatures. Furthermore, these alkylene glycol ethers can be monoethers where only one of the hydroxyl groups have been substituted, or can be diethers, where both of the hydroxyl groups have been substituted, and furthermore a plurality of types can be combined and used together.

In a particular embodiment, the organic solvent preferably is or comprises a blend of an alkylene glycol diether and an alkylene glycol monoether.

With such a blend an optimized viscosity can be easily reached. This blend ensures no print head damage and a low odor. Additionally the VOC output is not as high as in case of typical solvents with high volatility such as e.g. acetone or ethyl acetate.

Examples of the alkylene glycol monoether include ethylene glycol monomethyl ether, ethylene glycol monoethyl ether, ethylene glycol monoisopropyl ether, ethylene glycol monobutyl ether, ethylene glycol monohexyl ether, ethylene glycol monophenyl ether, diethylene glycol monomethyl ether, diethylene glycol monoethyl ether, diethylene glycol monobutyl ether, diethylene glycol dimethyl ether, diethylene glycol diethyl ether, triethylene glycol monomethyl ether, triethylene glycol monoethyl ether, triethylene glycol monobutyl ether, tetraethylene glycol monomethyl ether, tetraethylene glycol monoethyl ether, propylene glycol monomethyl ether, propylene glycol monomethyl ether, dipropylene glycol monomethyl ether, dipropylene glycol monoethyl ether and the like.

Examples of alkylene glycol diethers include ethylene glycol dimethyl ether, ethylene glycol diethyl ether, ethylene glycol dibutyl ether, diethylene glycol dimethyl ether, diethylene glycol diethyl ether, diethylene glycol dibutyl ether, triethylene glycol dimethyl ether, triethylene glycol diethyl ether, triethylene glycol dibutyl ether, tetraethylene glycol dimethyl ether, tetraethylene glycol diethyl ether, tetraethylene glycol dibutyl ether, propylene glycol dimethyl ether, propylene glycol diethyl ether, dipropyleneglycol dimethyl ether, dipropylene glycol diethyl ether and the like.

Preferred organic solvents for the ink jet printing ink are propylenglycol n-butylether, butyl glycolacetate, ethyleneglycol n-butyl ether, ethylene glycol monoethyl ether, diethylene glycol monoethyl ether, ethylene glycol monomethyl ether, diethylene glycol monomethyl ether, triethylene glycol monobutyl ether, tetraethylene glycol monomethyl ether, tetraethylene glycol monoethyl ether, diethylene glycol dibutyl ether, dipropylenglycol dimethylether, propyleneglycol diethyl ether, dipropylene glycol diethyl ether, isopropanol, ethylacetate, butyl glycol, dibutyl glycol and mixtures thereof.

In a further preferred embodiment, the organic solvent preferably is or comprises a blend of propylenglycol n-butyl ether and dipropylenglycol dimethyl ether. Within this blend dipropylenglycol dimethylether complies with all product regulations. Propylenglycol n-butylether on the other hand has the property to slightly etch certain polymeric substrates, like e.g. polyethylene terephthalate, polymethyl methacrylate, polyethylene, polycarbonate, an epoxy resin, polyimide, polyamide, polyester, ensuring a better adhesion of the conductive film to the substrate. Both solvents furthermore have an optimized behavior with respect to drying properties and viscosities in ink jet printing.

It will be appreciated by a person skilled in the art that the organic solvent or mixture of organic solvents is preferably meant to be a free of water solvent. In case such a solvent is used as purchased, the amount of water content shall not be higher than 3 wt-%, preferably not higher than 1.5 wt.-%, based on the total amount of solvent. Most preferably, the solvent is essentially free of water, which is meant to be in the context of this invention that the water content is below of 1 wt.-%.

The ink jet printing ink composition according to the present invention comprises a solvent or a mixture of organic solvents in an amount of a range of 60 to 84.5 wt.-%, based on the total weight of the composition. Preferably the amount of solvent or a mixture of organic solvents is in a range of 76.3 to 83 wt.-% and more preferably in a range of 77.3 to 82 wt.-%.

Below an amount of 60 wt.-% the composition becomes too viscous to be usable in ink jet printing technology. Furthermore agglomeration of the silver particles may occur.

Above an amount of 84.5 wt.-% the efficiency of the printing ink lacks in the sense that a concomitant too low amount of the silver particles is used in the printing ink. Furthermore, the emission of organic solvent during drying is too high.

### Silver particles (b):

In the composition according to the present invention a silver conductive pigment is used, wherein the amount is in a range of 15 to 25 wt.-%, based on the total weight of the composition. Preferably, the amount of the conductive pigment is in a range of 17.5 to 23 wt.-%, each based on the total weight of the composition.

It has been found that compositions with amounts of silver particles above 25 wt.-% tend to an undesired nozzle clogging which make the use in ink jet printing impossible. Below 15 wt.-% the efficiency of the composition with respect to the conductive pigment is too low.

The particle size of the silver particles is of crucial importance. The particle size distribution is determined with laser scattering methods and is displayed as volume averaged cumulative frequency distribution. From this distribution function the d₁₀₋, d₅₀₋ or d₉₀₋ value indicates that 10%, 50% or 90%, respectively, of the pigments have a diameter which is equal to or smaller than the value specified in each case.

The d₁₀-value is a measure of the content of fine particles, the median d₅₀-value is a measure of the average particle size (though the median is not equal to the arithmetical average value) and the d₉₀-value is a measure of the content of coarse particles in the whole size distribution.

According to this invention the particle size is determined with a Mastersizer 2000 (Quantachrome) apparatus according to the recommendation of the manufacturer using Mie-theory for data evaluation. During or just before the measurement the silver particles are treated with ultra sound in order to dissolve loose agglomerates. Thus the primary size distribution can be essentially determined.

According to this invention the silver particles have a d₅₀-value in a range of 130 nm to 800 nm, preferably in a range of 150 nm to 650 nm and most preferably in a range of 160 to 400 nm.

Below of a d₅₀ of 130 nm the silver particles tend to be difficult to be stabilized for longer time, i.e. agglomeration commences. In case of very small silver particles like about 10 nm of 5 nm, these particles are very difficult to be stabilized for longer time and besides agglomeration oxidation may occur. Therefore, it is of advantage to use larger silver particles to avoid these problems. Furthermore, nano silver particles are deemed to have difficulties in their approval according to safety regulation affairs. For example, silver nano particles are listed since 2013 in the CoRAP (Community Rolling Action Plan) list. Furthermore, they are very expensive.

Above a d₅₀ of 800 nm nozzle clogging in the print head can be observed. Furthermore, the conductivity of printed and sintered films can decrease.

In a further preferred embodiment, the silver particles, the ink jet printing ink composition have a d₉₀-value in a range of 500 to 2,500 nm and further preferred in a range of 600 -2,000 nm. Above a d₉₀-value of 2,500 nm nozzle clogging can be observed.

The silver particles are preferably stabilized by a dispersing agent (e). The amount of this agent can be low and preferably it is ≤ 2 wt.-%, based on the total weight of the composition.

The dispersing agent (e) or stabilizer is different from ethyl cellulose. It can be chosen from known stabilizers such as citrates, polyvinylpyrrolidone, polyvinyl alcohol, thiols and their derivatives, amines, carboxylic acids and their carboxylate derivatives, polyethylene glycols, and mixtures thereof.

In a preferred embodiment the dispersing agent (e) is a fatty acid with at least 6 C-atoms. The fatty acids preferably have up to 22 C-atoms. Typical examples are palmitic acid or stearic acid.

Usually this stabilizing agent will be utilized during the step of formation of the silver particles and will be adsorbed of the surface of the silver nanoparticles.

Silver particles can be produced by several methods like wet-chemical reduction of a silver salt, laser ablation, electrochemical methods (e.g. DE 112012001784 B4) or electrobeam lithography. In preferred embodiments the silver particles are produced by well-known wet-chemical reduction of a silver salt, typically silver nitrate, and in-situ stabilization by a suitable dispersing agent.

The silver particles are well stabilized in the printing ink composition in order not to form agglomerates, which cannot be redispersed any more. Therefore, it is preferred that the silver particles do not form super lattice forms like, for example, a "flower-shape" in which numerous particles are agglomerated forming large particles to avoid nozzle clogging of the ink head.

In a preferred embodiment the silver particles are essentially spherical particles.

Such spherical particles ensure a highest packaging density in the sintered conductive layers. Furthermore, the impact of the particles on the viscosity of the ink jet printing ink is lower than in any other form. During the printing process the ink jet printing ink will be pumped in the ink in print head or ink feeding system and here spherical particles have the lowest impact on the viscosity and flow behaviour, ensuring constant flow properties.

### Binder (c):

In the composition according to the present invention 0.5 - 5 wt.-% of a binder, wherein the binder comprises ethyl cellulose in an amount of a range of 85 to 100 wt.-%, based on the total amount of the binder, is used. In a preferred embodiment, the ink jet printing ink composition has a binder which comprises ethyl cellulose in an amount of a range of 95 to 100 wt.-%, based on the total amount of the binder. In a further embodiment the binder is only ethyl cellulose.

The binder can comprise other binders such as polyvinyl pyrrolidone, CAB or acrylate, in a small amount up to 15 wt.-%, preferably of up to 5 wt.-% based on the content of the whole binder. Larger amounts of other binders proofed not to be advantageous with respect to stability of the silver particles or conductivity or films obtained after printing.

Ethyl cellulose proved to be a very good binder with low impact on the conductivity. Furthermore, ethyl cellulose can additionally stabilize the silver particles with respect to their agglomeration stability. Furthermore, ethyl cellulose acts as viscosity regulating agent. Because of these combined beneficial properties only rather small amounts of this component are needed. The amount of ethyl cellulose is in a range of 0.5 to 5 wt.-%, preferably in a range of 0.6 to 3.5 and more preferably in a range of 0.7 to 2.5 wt.-% and most preferably in a range of 0.75 to 1.5 wt.-%, based on the weight of the total composition.

Such low amounts ensure a minimum impact of this organic compound on the conductivity of the cured film. Ethyl cellulose has a strong impact on the viscosity of the ink jet printing ink and therefore amounts larger than 5 wt.-%, preferably larger than 3.5 wt.-%, lead to unacceptably high viscosities.

### Ink Jet printing ink:

In a very preferred embodiment the ink jet printing ink composition of this invention comprises the components (a) solvents, (b) silver particles, (c) binder and (e) stabilizer in an amount of a range of 95 to 100 wt.-%, based on the total composition. In a further preferred embodiment the amount of these components is in a range of 97 to 100 wt.-% and in a most preferred embodiment in a range of 99 to 100 wt.-%.

Such compositions do have the advantage that they comprise only a small amount of different components. Thus, the compositions are easy to prepare and to handle and they can be utilized in many different applications.

It is easy to prepare and because of the optimized properties of the components only small amounts of binder or stabilizer is needed. Such components may have a negative impact on the conductivity of cured films after printing as they are non-conductive agents located on the surface of the silver particles. If the film is not perfectly sintered these remaining components may still be present at the interface of silver particles contacting each other and may create a resistance there.

Therefore, in a preferred embodiment, the ink jet printing ink composition does not contain any further conductive particles based on carbon, such as graphite, graphene, oxidized graphite, oxidized graphene, carbon nanotubes or the like.

In further preferred embodiments, the ink jet printing ink composition does not contain further components like glass particles. This kind of particles is often found in inks, when printing on glass substrates or on solar cells is intended.

It is crucial that the viscosity of the ink jet printing ink composition has a viscosity in a range of 3 to 25 mPas, further preferred of in a range of 4 - 20 mPas and most preferred in a range of 4. 5 - 16 mPas. Ink jet printing inks need such low viscosities to be utilized with this printing technique.

The viscosity is determined at a temperature of 25°C with a Brookfield rotational viscosimeter LV, Model DV-II+ using spindle no. 61 at 100 rpm.

In a preferred embodiment of the ink jet printing ink composition the ratio of the amount of binder to the amount of silver particles is in a range of 3 % to 10 % and further preferred in a range of 4 to 7 %. The binder can be used in such low ratios because of its outstanding properties of binding and of stabilization. Larger amounts may lead to too high viscosities of the ink.

In a further embodiment of the ink jet printing ink composition comprises ≤ 2 wt.-%, preferred < 1.5 wt.-% and most preferred < 1 wt.-%, each based on the total weight of the composition, of an antioxidizing agent (d).Such agents can help to stabilize the silver particles against oxidation.

Examples for antioxidizing agents are ascorbic acid or vitamin C (E300), ascorbates of sodium (E301), of calcium (E302), diacetyl 5-6-1 ascorbic acid (E303), palmityl 6-1 ascorbic acid (E304); citric acid (E330), citrates of sodium (E331) of potassium (E332) and of calcium (E333); Tartric acid (E334), tartrates of sodium (E335), potassium (E336) and of sodium and of potassium (E337); butyl hydroxy anisole (E320) and butyl hydroxy toluene (E321); gallates of octyl (E311) or of dodecyl (E312); lactates of sodium (E325), of potassium (E326) or of calcium (E327); lecithins (E322); natural tocopherols (E306), synthesis of α-tocopherol (E307), synthesis of γ-tocopherol (E308) and synthesis δ-tocopherol (E309), wherein all of the tocopherols form vitamin E; eugenol, thymol and/or cinnamaldehyde, as well as a mixture of two or more of these antioxidizing agents.

In embodiments wherein the ink jet printing ink composition includes such antioxidizing agents, the amount of the components a) solvents, b) silver particles, c) binder and e) stabilizer in a range of 95 to 100 wt.-%, preferably in a range of 96 to 99 wt.-% and more preferably in a range of 97 to 98 wt.-%, each based on the total composition.

A preferred ink jet printing ink composition comprises or consists of the following components:
(a) 76.3 to 83 wt.-% of an organic solvent or a mixture of organic solvents,
(b) 0.7 to 2.5 wt.-% of ethyl cellulose as the binder,
(c) 17.5 to 23 wt.-% of silver particles having a d₅₀-value in a range of 130 nm to 800 nm,
(d) optionally antioxidizing agents,
(e) optionally a dispersing agent for the silver particles different from binder (b),
wherein all amounts are referred to the total amount of the ink jet printing ink composition, if not defined otherwise.

In a further aspect a method of producing an ink jet printing ink composition is provided, which is characterized that it comprises the following steps:
(i) Providing a silver particle dispersion having a d₅₀-value in a range of 130 nm and 800 nm and optionally coating the silver particles with a dispersing agent (e)
(ii) Optionally drying the silver pigment dispersion of step (i),
(iii) preparing a first dispersion by dissolving the binder (b) in the organic solvent or a mixture of organic solvents (a),
(iv) adding the silver pigment dispersion of step (i) or the silver pigment powder of step (ii) to the dispersion of step (iii) under stirring and/or impact of ultrasound.

This method ensures a good solubility of the binder and therefore no clumping together of the metal particles leading to a homogenous ink jet printing ink.

The conductive ink jet printing ink can be printed on various substrates. Examples for the substrates are plastics like is polyethylene terephthalate, polymethyl methacrylate, polyethylene, polypropylene, polycarbonate, an epoxy resin, polyimide, polyamide, polyester, polyaniline, polyvinylidene flouride or copolymers such as ABS (acrylonitrile, butandiene, styrol) or combinations of such plastics. Further suitable substrates are glass or paper designed for printed electronics applications.

Various patterns can be printed using all the advantages of ink jet printing here. The patterns can be adapted individually to the needs of the applicant, leading up to only one lot size. As ink jet printing is a contactless printing method no further preparations typical for other printing methods like e.g. provision of sieves need to be made.

The substrates are printed by the drop-on-demand or the continuous ink jet technique. The drop-on-demand technique is preferred as here a wide use of the printing ink with different printing heads is possible.

The applications of the printed substrates can be RFID antenna, organic thin film transistor (OTFT), a PCB plate or a solar grid.

After ink jet printing on the substrate the ink is preferably first dried at a temperature in a range of 35 °C to 80 °C and more preferably in a range of 40 °C to 70 °C. This drying step lasts for about a few seconds to about half an hour. Most of the solvents are evaporated here.

Then the film is sintered of typically a temperature range of 400 to 600 °C and preferably in a range of 430 - 500 °C. The sintering step can be made by laser sintering, flash light sintering, thermal sintering or irradiation of IR-light.

### EXAMPLES

### Preparations:

Ethylcellulose (Ethocel 45, Dow Chemical) or other binders were dissolved in a mixture of organic solvents according to the amounts displayed in table 1.

Commercially available silver particles (Metalor P620-7) were added according to the amounts displayed in table 1 and well dispersed under vigorous stirring.

### Particle Size Measurement:

The inks of Examples 1 to 3 were further diluted in isopropanol under impact of ultra sound and the particle size distribution was measured using a Mastersizer 2000. The data was evaluated as volume averaged data according to the Mie-theory mode using the blue light of the instrument (λ = 466 nm) and as optical constants for the refractive index = 0.14 and for the absorption constant = 3.99.

A d₅₀ of 180 nm - 210 nm was determined for all inks. The d₉₀-value was in a range of 750 to 850 nm.

The flash point was measured using the method of Abel according to EN ISO 13736 using a flash point detector ABA 4 (Petrotest) and cyclohexanone and 1-hexanol as secondary standards.

Comparative Example 7: An ink according to Example 3 was prepared, but with a silver particle of a d₅₀-value of about 2.1 µm and a d₉₀-value of about 3.7 µm (Metalor P554-32).

It was not possible to print this ink as the nozzles of the printing head were clogged.

**Table 1: Prepared compositions (all amounts in wt.-%)**

| Compound: | Ex. 1 | Ex. 2 | Ex. 3 | Comp. Ex. 4 | Comp. Ex. 5 | Comp. Ex. 6 |
|---|---|---|---|---|---|---|
| Silver particles | 20 | 20 | 20 | 20 | 20 | 20 |
| Particle size | | | | | | |
| Neocryl B725 (acrylate) | | | | 1 | | |
| Ethyl cellulose (Ethocel 45) | 1 | 1 | 1 | | | |
| Mowital B20H (PVB) | | | | | 1 | |
| Polyvinyl pyrrolidone Luviscol 17 | | | | | | 1 |
| Isopropanol | 40 | | | | | |
| Ethylacetate | | 40 | | | | |
| Dowanol PnB (propylenglycol n-butylether) | | | 40 | 40 | 40 | 40 |
| Butylglycol acetate | 19 | 19 | 19 | 19 | 19 | 19 |
| dipropylene glycol dimethylether | 20 | 20 | 20 | 20 | 20 | 20 |
| Flash point | 17°C | 4 °C | 63°C | 63°C | 63°C | 63°C |

Directly after mixing, the obtained compositions were filled into glass test tubes. Dispersion stability tests were performed by keeping the thus filled test tubes without further mixing for some time at room temperature and at elevated temperature (45°C). At regular time intervals the test tubes were assessed. The results of these tests are summarized in tables 2 and 3.

In the assessment the following scoring was used:
0 no precipitation visible
1 first sign of precipitation visible on bottom of test tube
2 some slight precipitation visible on bottom of test tube
3 some precipitation visible on bottom and top of test tube
4 precipitation clearly visible
5 majority of silver particles precipitated on the bottom of test tube

**Table 2: Assessment stability tests at room temperature**

| Example | Exposure time (in days) at room temperature | | | | | | |
|---|---|---|---|---|---|---|---|
| | 3 | 5 | 7 | 10 | 14 | 21 | 28 |
| Ex. 1 | 0 | 0 | 1 | 1 | 1 | 1 | 2 |
| Ex. 2 | 0 | 0 | 1 | 1 | 1 | 1 | 2 |
| Ex. 3 | 0 | 0 | 1 | 1 | 1 | 1 | 2 |
| Comp. Ex. 4 | 5 | 5 | 5 | 5 | 5 | 5 | 5 |
| Comp. Ex. 5 | 5 | 5 | 5 | 5 | 5 | 5 | 5 |
| Comp. Ex. 6 | 0 | 0 | 2 | 2 | 3 | 4 | 4 |

**Table 3: Assessment stability tests at 45°C**

| Example | Exposure time (in days) at 45°C | | | | | | |
|---|---|---|---|---|---|---|---|
| | 3 | 5 | 7 | 10 | 14 | 21 | 28 |
| Ex. 1 | 0 | 0 | 1 | 1 | 1 | 2 | 3 |
| Ex. 2 | 0 | 0 | 1 | 1 | 3 | 3 | 3 |
| Ex. 3 | 0 | 0 | 1 | 1 | 1 | 2 | 3 |
| Comp. Ex. 4 | 5 | 5 | 5 | 5 | 5 | 5 | 5 |
| Comp. Ex. 5 | 5 | 5 | 5 | 5 | 5 | 5 | 5 |
| Comp. Ex. 6 | 0 | 0 | 4 | 4 | 4 | 4 | 4 |

Clearly the inks of the inventive Examples had a much better stability with regard to sedimentation than the Comparative examples. This effect is attributed to the stabilizing properties of ethyl cellulose. The small amount of sedimented particles seen after 28 days could be easily redispersed using ultra sound treatment. A redispersion was even possible after one year of sedimentation. The sedimented pigments from the comparative examples could not completely be redispersed as agglomeration had started to be irreversible here.

### Procedure conductivity measurement:

A xy-100-table (Konica Minolta) was combined with a print head control system of GIS and an ink feeding system (Jet-set Industrial, print head: X1002 from Xaar). As a substrate a transparent PET foil (Hostaphan GN 4660 / 175 µm) was used. The printing ink of Example 3 was printed thereon in a pattern. The Ink was dried at 40 °C (about 5 min) and then sintered using a Xe-flash lamp as light source (Pulseforge (Novacentrix) with a pulse envelope for two flashs with durations of each 2,000 µs and 1,700 µs 4 using a voltage of 350 V). The thickness of the dried film was 3 µm.

The conductivity was measured form a rectangle with 10 cm x 2 cm. The conductivity of the films were measured using a 4 point measurement at a voltage of 10 V using a Loresta-GP MCP-T610 apparatus (Mitsubishi Chemical Analytech). The volume resistance was 1.0 × 10⁻⁴ Ωcm and the sheet resistance was 3.3 × 10⁻¹ Ω/□. These values are very low for a film of a thickness of 3 µm.

## Claims

1. Ink jet printing ink composition comprising the following components:
(a) 60 - 84.5 wt.-% of an organic solvent or a mixture of organic solvents,
(b) 0.5 - 5 wt.-% of a binder, wherein the binder comprises ethyl cellulose in an amount of a range of 85 to 100 wt.-%, based on the total amount of the binder,
(c) 15 - 25 wt.-% of silver particles having a d₅₀-value in a range of 130 nm to 800 nm,
(d) optionally antioxidizing agents,
(e) optionally a dispersing agent for the silver particles different from binder (b),
wherein all amounts are referred to the total amount of the ink jet printing ink composition, if not defined otherwise.

2. Ink jet printing ink composition according to claim 1, **characterized in that** the composition comprises the components (a), (b), (c) and (e) in an amount of a range of 95 to 100 wt.-%, based on the total composition.

3. Ink jet printing ink composition according to claim 1 or 2, **characterized in that** the composition has a flash point of at least 61 °C.

4. Ink jet printing ink composition according to any of the preceding claims, **characterized in that** the silver particles have a d₉₀-value in a range of 500 to 2,500 nm.

5. Ink jet printing ink composition according to any of the preceding claims, **characterized in that** the binder comprises ethyl cellulose in an amount of a range of 95 to 100 wt.-%, based on the total amount of the binder.

6. Inkjet printing ink composition according to claim 5, **characterized in that** the binder is ethyl cellulose.

7. Ink jet printing ink composition according to any of the preceding claims, wherein the ratio of the amount of binder to the amount of silver particles is in a range of 3 % to 10 %.

8. Ink jet printing ink composition according to any of the preceding claims, **characterized in that** the composition has a viscosity in a range of 3 to 25 mPas, determined at a temperature of 25°C with a Brookfield rotational viscosimeter LV, Model DV-II+ using spindle no. 61 at 100 rpm.

9. Ink jet printing ink composition according to any of the preceding claims, **characterized in that** the composition does not contain any conductive particles based on carbon, such as graphite, graphene or carbon nanotubes.

10. Ink jet printing ink composition according to any of the preceding claims, **characterized in that** the silver particles are essentially spherical particles.

11. Ink jet printing ink composition according to any of the preceding claims, **characterized in that** the solvents are selected from the group of methyl alcohol, ethyl alcohol, propyl alcohol, butyl alcohol or isopropyl alcohol, acetone, methylethyl ketone, cyclohexanone methyl acetate, ethyl acetate, propyl acetate, butyl acetate, methyl propionate, ethyl propionate diethyl ether, dipropyl ether, tetrahydrofuran, dioxane, ethylene glycol based ether or propylene glycol based ether which contains a methyl, n-propyl, i-propyl, n-butyl, i-butyl, hexyl, or 2-ethyl hexyl resin group and an allyl or phenyl group having a double bond as a base, ethylene glycol monomethyl ether, ethylene glycol monoethyl ether, ethylene glycol monoisopropyl ether, ethylene glycol monobutyl ether, ethylene glycol monohexyl ether, ethylene glycol monophenyl ether, diethylene glycol monomethyl ether, diethylene glycol monoethyl ether, diethylene glycol monobutyl ether, diethylene glycol dimethyl ether, diethylene glycol diethyl ether, triethylene glycol monomethyl ether, triethylene glycol monoethyl ether, triethylene glycol monobutyl ether, tetraethylene glycol monomethyl ether, tetraethylene glycol monoethyl ether, propylene glycol monomethyl ether, propylene glycol monomethyl ether, dipropylene glycol monomethyl ether, dipropylene glycol monoethyl ether, ethylene glycol dimethyl ether, ethylene glycol diethyl ether, ethylene glycol dibutyl ether, diethylene glycol dimethyl ether, diethylene glycol diethyl ether, diethylene glycol dibutyl ether, triethylene glycol dimethyl ether, triethylene glycol diethyl ether, triethylene glycol dibutyl ether, tetraethylene glycol dimethyl ether, tetraethylene glycol diethyl ether, tetraethylene glycol dibutyl ether, propylene glycol dimethyl ether, propylene glycol diethyl ether, dipropylene glycol dimethyl ether, dipropylene glycol diethyl ether and mixtures thereof.

12. Ink jet printing ink composition according to claim 11, **characterized in that** the organic solvent preferably is or comprises a blend of an alkylene glycol diether and an alkylene glycol monoether.

13. Method of producing an ink jet printing ink composition according to any of claims 1 to 12, characterized that it comprises the following steps:
(i) Providing a silver particle dispersion having a d₅₀-value in a range of 130 nm and 800 nm and optionally coating the silver particles with a dispersing agent (e)
(ii) Optionally drying the silver pigment dispersion of step (i),
(iii) preparing a first dispersion by dissolving the binder (b) in the organic solvent or a mixture of organic solvents (a),
(iv) adding the silver pigment dispersion of step (i) or the silver pigment powder of step
(ii) to the dispersion of step (iii) under stirring and/or impact of ultrasound.

14. Use of the Ink jet printing ink composition of any of claims 1 to 12 in a drop-on-demand ink jet printing process on a substrate to form a conductive layer.

15. Process to apply a conductive line or a pattern to a substrate, **characterized in that**,
(i) an ink jet printing ink of claims 1 to 12 is printed by a drop-on-demand ink jet process or a continuous ink jet process on the substrate,
(ii) optionally the printed ink is dried at temperatures of 35 °C to 80 °C and
(iii) the printed ink is sintered at temperatures of 400 to 600 °C.

## Patentansprüche

1. Tintenstrahldrucktintenzusammensetzung, umfassend die folgenden Komponenten:
(a) 60 bis 84,5 Gew.% eines organischen Lösungsmittels oder einer Mischung organischer Lösungsmittel,
(b) 0,5 bis 5 Gew.% eines Bindemittels, wobei das Bindemittel Ethylcellulose in einer Menge in einem Bereich von 85 bis 100 Gew.% umfasst, bezogen auf die Gesamtmenge des Bindemittels,
(c) 15 bis 25 Gew.% Silberpartikel mit einem d₅₀-Wert im Bereich von 130 nm bis 800 nm,
(d) gegebenenfalls Antioxidansmittel,
(e) gegebenenfalls ein Dispergiermittel für die Silberpartikel, das sich von Bindemittel (b) unterscheidet,
wobei alle Mengen sich auf die Gesamtmenge der Tintenstrahldrucktintenzusammensetzung beziehen, sofern nicht anderweitig definiert.

2. Tintenstrahldrucktintenzusammensetzung nach Anspruch 1, **dadurch gekennzeichnet, dass** die Zusammensetzung die Komponenten (a), (b), (c) und (e) in einer Menge im Bereich von 95 bis 100 Gew.% umfasst, bezogen auf die Gesamtzusammensetzung.

3. Tintenstrahldrucktintenzusammensetzung nach Anspruch 1 oder 2, **dadurch gekennzeichnet, dass** die Zusammensetzung einen Flammpunkt von mindestens 61 °C hat.

4. Tintenstrahldrucktintenzusammensetzung nach einem der vorhergehenden Ansprüche, **dadurch gekennzeichnet, dass** die Silberpartikel einen d₉₀-Wert in einem Bereich von 500 bis 2500 nm haben.

5. Tintenstrahldrucktintenzusammensetzung nach einem der vorhergehenden Ansprüche, **dadurch gekennzeichnet, dass** das Bindemittel Ethylcellulose in einer Menge in einem Bereich von 95 bis 100 Gew.% umfasst, bezogen auf die Gesamtmenge des Bindemittels.

6. Tintenstrahldrucktintenzusammensetzung nach Anspruch 5, **dadurch gekennzeichnet, dass** das Bindemittel Ethylcellulose ist.

7. Tintenstrahldrucktintenzusammensetzung nach einem der vorhergehenden Ansprüche, wobei das Verhältnis der Menge an Bindemittel zu der Menge an Silberpartikeln in einem Bereich von 3 % bis 10 % liegt.

8. Tintenstrahldrucktintenzusammensetzung nach einem der vorhergehenden Ansprüche, **dadurch gekennzeichnet, dass** die Zusammensetzung eine Viskosität im Bereich von 3 bis 25 mPa·s hat, bestimmt bei einer Temperatur von 25 °C mit einem Brookfield Rotationsviskosimeter LV, Modell DV-II+, unter Verwendung von Spindel Nr. 61 mit 100 UpM.

9. Tintenstrahldrucktintenzusammensetzung nach einem der vorhergehenden Ansprüche, **dadurch gekennzeichnet, dass** die Zusammensetzung keinerlei leitfähige Partikel auf Basis von Kohlenstoff enthält, wie Graphit, Graphen oder Kohlenstoffnanoröhrchen.

10. Tintenstrahldrucktintenzusammensetzung nach einem der vorhergehenden Ansprüche, **dadurch gekennzeichnet, dass** die Silberpartikel im Wesentlichen sphärische Partikel sind.

11. Tintenstrahldrucktintenzusammensetzung nach einem der vorhergehenden Ansprüche, **dadurch gekennzeichnet, dass** die Lösungsmittel ausgewählt sind aus der Gruppe von Methylalkohol, Ethylalkohol, Propylalkohol, Butylalkohol oder Isopropylalkohol, Aceton, Methylethylketon, Cyclohexanon, Methylacetat, Ethylacetat, Propylacetat, Butylacetat, Methylpropionat, Ethylpropionat, Diethylether, Dipropylether, Tetrahydrofuran, Dioxan, Ether auf Ethylenglykolbasis oder Ether auf Propylenglykolbasis, der eine Methyl-, n-Propyl-, i-Propyl-, n-Butyl-, i-Butyl-, Hexyl- oder 2-Ethylhexylharzgruppe und eine Allyl- oder Phenylgruppe mit einer Doppelbindung als Basis enthält, Ethylenglykolmonomethylether, Ethylenglykolmonoethylether, Ethylenglykolmonoisopropylether, Ethylenglykolmonobutylether, Ethylenglykolmonohexylether, Ethylenglykolmonophenylether, Diethylenglykolmonomethylether, Diethylenglykolmonoethylether, Diethylenglykolmonobutylether, Diethylenglykoldimethylether, Diethylenglykoldiethylether, Triethylenglykolmonomethylether, Triethylenglykolmonoethylether, Triethylenglykolmonobutylether, Tetraethylenglykolmonomethylether, Tetraethylenglykolmonoethylether, Propylenglykolmonomethylether, Propylenglykolmonomethylether, Dipropylenglykolmonomethylether, Dipropylenglykolmonoethylether, Ethylenglykoldimethylether, Ethylenglykoldiethylether, Ethylenglykoldibutylether, Diethylenglykoldimethylether, Diethylenglykoldiethylether, Diethylenglykoldibutylether, Triethylenglykoldimethylether, Triethylenglykoldiethylether, Triethylenglykoldibutylether, Tetraethylenglykoldimethylether, Tetraethylenglykoldiethylether, Tetraethylenglykoldibutylether, Propylenglykoldimethylether, Propylenglykoldiethylether, Dipropylenglykoldimethylether, Dipropylenglykoldiethylether und Mischungen davon.

12. Tintenstrahldrucktintenzusammensetzung nach Anspruch 11, **dadurch gekennzeichnet, dass** das organische Lösungsmittel vorzugsweise ein Gemisch eines Alkylenglykoldiethers und eines Alkylenglykolmonoethers ist oder umfasst.

13. Tintenstrahldrucktintenzusammensetzung nach einem der Ansprüche 1 bis 12, **dadurch gekennzeichnet, dass** es die folgenden Schritte umfasst:
(i) Bereitstellen einer Silberpartikeldispersion mit einem d₅₀-Wert in einem Bereich von 130 nm und 800 nm und gegebenenfalls Beschichten der Silberpartikel mit einem Dispergiermittel (e),
(ii) gegebenenfalls Trocknen der Silberpigmentdispersion von Schritt (i),
(iii) Herstellen einer ersten Dispersion durch Lösen des Bindemittels (b) in dem organischen Lösungsmittel oder einer Mischung von organischen Lösungsmitteln (a),
(iv) Zufügen der Silberpigmentdispersion von Schritt (i) oder des Silberpigmentpulvers von Schritt (ii) zu der Dispersion von Schritt (iii) unter Rühren und/oder Einfluss von Ultraschall.

14. Verwendung der Tintenstrahldrucktintenzusammensetzung nach einem der Ansprüche 1 bis 12 in einem Tintenstrahldruckverfahren mit gesteuerter Tropfenerzeugung ("Drop on Demand") auf einem Substrat, um eine leitfähige Schicht zu bilden.

15. Verfahren zum Aufbringen einer leitfähigen Bahn oder Struktur auf ein Substrat, **dadurch gekennzeichnet, dass**
(i) eine Tintenstrahldrucktinte nach den Ansprüchen 1 bis 12 mittels eines Drop on Demand-Tintenstrahlverfahrens oder eines kontinuierlichen Tintenstrahlverfahrens auf das Substrat gedruckt wird,
(ii) gegebenenfalls die gedruckte Tinte bei einer Temperatur von 35 °C bis 80 °C getrocknet wird, und
(iii) die gedruckte Tinte bei Temperaturen von 400 °C bis 600 °C gesintert wird.

## Revendications

1. Composition d'encre pour impression par jet d'encre comprenant les composants suivants :
(a) 60 à 84,5 % en poids d'un solvant organique ou d'un mélange de solvants organiques,
(b) 0,5 à 5 % en poids d'un liant, le liant comprenant de l'éthylcellulose en une quantité d'une plage de 85 à 100 % en poids, sur la base de la quantité totale du liant,
(c) 15 à 25 % en poids de particules d'argent possédant une valeur de d₅₀ dans une plage de 130 nm à 800 nm,
(d) éventuellement des agents antioxydants,
(e) éventuellement un agent de dispersion pour les particules d'argent différent du liant (b),
toutes les quantités se rapportant à la quantité totale de la composition d'encre pour impression par jet d'encre, sauf défini autrement.

2. Composition d'encre pour impression par jet d'encre selon la revendication 1, **caractérisée en ce que** la composition comprend les composants (a), (b), (c) et (e) en une quantité d'une plage de 95 à 100 % en poids, sur la base de la composition totale.

3. Composition d'encre pour impression par jet d'encre selon la revendication 1 ou 2, **caractérisée en ce que** la composition possède un point éclair d'au moins 61 °C.

4. Composition d'encre pour impression par jet d'encre selon l'une quelconque des revendications précédentes, **caractérisée en ce que** les particules d'argent possèdent une valeur de d₉₀ dans une plage de 500 à 2 500 nm.

5. Composition d'encre pour impression par jet d'encre selon l'une quelconque des revendications précédentes, **caractérisée en ce que** le liant comprend de l'éthylcellulose en une quantité d'une plage de 95 à 100 % en poids, sur la base de la quantité totale du liant.

6. Composition d'encre pour impression par jet d'encre selon la revendication 5, **caractérisée en ce que** le liant est de l'éthylcellulose.

7. Composition d'encre pour impression par jet d'encre selon l'une quelconque des revendications précédentes, le rapport de la quantité de liant sur la quantité de particules d'argent étant dans une plage de 3 % à 10 %.

8. Composition d'encre pour impression par jet d'encre selon l'une quelconque des revendications précédentes, **caractérisée en ce que** la composition possède une viscosité dans une plage de 3 à 25 mPas, déterminée à une température de 25 °C avec un viscosimètre rotatif Brookfield LV, modèle DV-II+ en utilisant une tige n°61 à 100 tpm.

9. Composition d'encre pour impression par jet d'encre selon l'une quelconque des revendications précédentes, **caractérisée en ce que** la composition ne contient aucune particule conductrice à base de carbone, telle que le graphite, le graphène ou des nanotubes de carbone.

10. Composition d'encre pour impression par jet d'encre selon l'une quelconque des revendications précédentes, **caractérisée en ce que** les particules d'argent sont des particules essentiellement sphériques.

11. Composition d'encre pour impression par jet d'encre selon l'une quelconque des revendications précédentes, **caractérisée en ce que** les solvants sont choisis dans le groupe composé de l'alcool méthylique, l'alcool éthylique, l'alcool propylique, l'alcool butyrique ou l'alcool isopropylique, l'acétone, la méthyléthylcétone, la cyclohexanone, l'acétate de méthyle, l'acétate d'éthyle, l'acétate de propyle, l'acétate de butyle, le propionate de méthyle, le propionate d'éthyle, le diéthyléther, le dipropyléther, le tétrahydrofuranne, le dioxanne, un éther à base d'éthylène glycol ou un éther à base de propylèneglycol qui contient un groupe de résine méthylique, n-propylique, i-propylique, n-butylique, i-butylique, hexylique ou 2-éthylhexylique et un groupe allyle ou phényle possédant une double liaison comme une base, l'éther monométhylique d'éthylène glycol, l'éther monoéthylique d'éthylène glycol, l'éther monoisopropylique d'éthylène glycol, l'éther monobutylique d'éthylène glycol, l'éther monohexylique d'éthylène glycol, l'éther monophénylique d'éthylène glycol, l'éther monométhylique de diéthylène glycol, l'éther monoéthylique de diéthylène glycol, l'éther monobutylique de diéthylène glycol, l'éther diméthylique de diéthylène glycol, l'éther diéthylique de diéthylène glycol, l'éther monométhylique de triéthylène glycol, l'éther monoéthylique de triéthylène glycol, l'éther monobutylique de triéthylène glycol, l'éther monométhylique de tétraéthylène glycol, l'éther monoéthylique de tétraéthylène glycol, l'éther monométhylique de propylène glycol, l'éther monométhylique de propylène glycol, l'éther monométhylique de dipropylèneglycol, l'éther monoéthylique de dipropylèneglycol, l'éther diméthylique d'éthylèneglycol, l'éther diéthylique d'éthylèneglycol, l'éther dibutylique d'éthylèneglycol, l'éther diméthylique de diéthylèneglycol, l'éther diéthylique de diéthylèneglycol, l'éther dibutylique de diéthylèneglycol, l'éther diméthylique de triéthylèneglycol, l'éther diéthylique de triéthylène glycol, l'éther dibutylique de triéthylène glycol, l'éther diméthylique de tétraéthylène glycol, l'éther diéthylique de tétraéthylène glycol, l'éther dibutylique de tétraéthylène glycol, l'éther diméthylique de propylène glycol, l'éther diéthylique de propylène glycol, l'éther diméthylique de dipropylène glycol, l'éther diéthylique de dipropylène glycol, et des mélanges correspondants.

12. Composition d'encre pour impression par jet d'encre selon la revendication 11, **caractérisée en ce que** le solvant organique est préférablement ou comprend un mélange d'un diéther d'alkylèneglycol et d'un monoéther d'alkylèneglycol.

13. Procédé de production d'une composition d'encre pour impression par jet d'encre selon l'une quelconque des revendications 1 à 12, **caractérisé en ce qu'**il comprend les étapes suivantes :
(i) la mise à disposition d'une dispersion de particule d'argent possédant une valeur de d₅₀ dans une plage de 130 nm à 800 nm et éventuellement le revêtement des particules d'argent par un agent de dispersion (e)
(ii) éventuellement le séchage de la dispersion de pigment d'argent de l'étape (i),
(iii) la préparation d'une première dispersion en dissolvant le liant (b) dans le solvant organique ou un mélange de solvants organiques (a),
(iv) l'ajout de la dispersion de pigment d'argent de l'étape (i) ou de la poudre de pigment d'argent de l'étape (ii) à la dispersion de l'étape (iii) sous agitation et/ou impact d'ultrasons.

14. Utilisation de la composition d'encre pour impression par jet d'encre selon l'une quelconque des revendications 1 à 12 dans un processus d'impression par jet d'encre à goutte à la demande sur un substrat pour former une couche conductrice.

15. Processus pour appliquer une ligne conductrice ou un motif sur un substrat, **caractérisé en ce que**,
(i) une encre pour impression par jet d'encre selon les revendications 1 à 12 est imprimée par un processus par jet d'encre à goutte à la demande ou un processus par jet d'encre continu sur le substrat,
(ii) éventuellement, l'encre imprimée est séchée à des températures de 35 °C à 80 °C et
(iii) l'encre imprimée est frittée à des températures de 400 à 600 °C.
